# EUROPÄISCHE PATENTANMELDUNG

(11) **EP 2 020 514 A2**
(43) Veröffentlichungstag der Anmeldung: **04.02.2009**
(21) Anmeldenummer: 08161036.2
(22) Anmeldetag: 24.07.2008
(51) Int. Cl.: F16C 11/06

(54) **Gelenk- und/oder Lageranordnung**

(30) Priorität: 27.07.2007 DE 102007035654
(71) Anmelder: ZF Friedrichshafen AG, 88038 Friedrichshafen (DE)
(72) Erfinder: Brunneke, Hans-Gerd, 49124 Georgsmarienhütte (DE); Lösche, Christian, 32351 Stemwede (DE); Schmudde, Werner, 49593 Bersenbrück (DE)

(57) **Zusammenfassung**

Eine Gelenk- und/oder Lageranordnung (1) mit einem Gelenkzapfen (2), insbesondere einem Gelenkzapfen (2), dessen Kopfbereich (3) gegenüber einer aufnehmenden Gelenkschale (4) beweglich ist, wobei der Gelenkzapfen (2) zumindest bereichsweise von einer umlaufenden Dichtungsmanschette (7) umgeben ist, wird so ausgebildet, dass der Dichtungsmanschette (7) außenseitig ein von dieser separater und an ihren Formverlauf anpassbarer Schutzumhang (11) übergelegt ist.

## Beschreibung

Die Erfindung betrifft eine Gelenk- und/oder Lageranordnung nach dem Oberbegriff des Anspruchs 1 sowie ein Kraftfahrzeug mit einer oder mehreren derartigen Gelenk-und/oder Lageranordnung(en), insbesondere in Fahrwerks- und/oder Lenkungsteilen.

Bei Gelenkanordnungen, die einen beweglich gelagerten Zapfen aufweisen, etwa derart, dass dieser mit seinem erweiterten Kopfbereich in einer Gelenkschale relativbeweglich gelagert ist, muss der Reibungsbereich zwischen Kopfbereich und Lagerschale möglichst gut gegen Partikel- und/oder Feuchtigkeitseinwirkung abgedichtet sein. Hierfür ist es bekannt, den Zapfen über einen großen Bereich seiner axialen Länge mit einer Dichtungsmanschette aus einem derart elastischen Material zu umgeben, dass diese den Bewegungen des Zapfens folgen kann. Eine solche Dichtungsmanschette ist besonders flexibel verformbar, wenn sie balgartig mit ringförmigen Ausbauchungen und zwischenliegenden Hinterschneidungen ausgebildet ist.

Bei Einbau derartiger Gelenk- und/oder Lageranordnungen in Fahrzeugen zum insbesondere Forst- und/oder Geländeeinsatz, etwa in Schleppern, Geländewagen, Unimogs, Militärfahrzeugen oder ähnlichem, sind die Manschetten der Gelenk- und/oder Lageranordnungen häufig, insbesondere bei frei stehenden Achsen, der Gefahr einer Verletzung durch äußere mechanische Beschädigung, wie etwa durch Steine oder Äste, ausgesetzt.

Um einen Schutz der Dichtungsmanschetten zu erreichen, schlägt die DE 102 49 073 A1 vor, diese mehrlagig auszubilden und neben einer weichen inneren Lage eine stabilere äußere Lage vorzusehen. Eine solche Lösung stößt jedoch bei balgartigen Manschetten mit großen Durchmesserunterschieden zwischen den vorstehenden Ausbauchungen und den Hinterschneidungen an ihre Grenzen, insbesondere dann, wenn ein großer Winkelbereich der Zapfenauslenkung sichergestellt werden muss, da die äußere Lage dann keine hinreichende Elastizität bietet.

Aus der US-PS 5,145,191 ist es zudem bekannt, einen mit mehreren Ringfalten versehenen Dichtungsbalg von einer mit Abstand hierzu angeordneten, fest eingespannten, glockenartigen äußeren Umhüllung zu umgeben. Diese schränkt jedoch die Auslenkungsmöglichkeit des Faltenbalgs ein. Zudem kommt es bei größerer Zapfenauslenkung zwischen dessen nach außen vorstehenden Ringen und der glockenartigen Umhüllung zu punktueller und stark verschleißfördernder Reibung.

Der Erfindung liegt das Problem zugrunde, bei Gelenken mit beweglichen Zapfen einen guten Schutz einer Dichtungsmanschette gegen äußere Beschädigung zu erreichen und dennoch die Zapfenbeweglichkeit möglichst wenig einzuschränken.

Die Erfindung löst dieses Problem durch eine Gelenk- oder Lageranordnung mit den Merkmalen des Anspruchs 1 sowie durch ein Kraftfahrzeug mit den Merkmalen des Anspruchs 13. Hinsichtlich vorteilhafter Ausgestaltungen und Weiterbildungen der Erfindung wird auf die weiteren Ansprüche 2 bis 12 und 14 verwiesen.

Erfindungsgemäß ist mit der Anordnung eines um die Dichtungsmanschette gelegten separaten außenseitigen Schutzumhangs und dessen Anpassbarkeit an diese einerseits ein guter Schutz für die Manschette ermöglicht. Durch die separate Ausbildung des Umhangs und die daraus resultierende Relativbewegungsmöglichkeit zwischen diesem und der Dichtungsmanschette ist zudem eine große Zapfenauslenkung ermöglicht. Es ergeben sich keine Bewegungseinschränkungen wie bei einer koextrudierten Außenlage oder einer mehr oder weniger starren äußeren Glocke. Zudem ist die Entformung eines spritzgegossenen Faltenbalgs nicht behindert, das der Schutzumhang erst auf den fertigen Balg aufgelegt wird.

Insbesondere bildet der Schutzumhang vorteilhaft einen Stichschutz aus, der die Beschädigung durch spitze Steine, Zweige o. ä. verhindert.

Wenn der Schutzumhang die Dichtungsmanschette nach Art einer Schlauchumhüllung über ihren gesamten Umfang umläuft, kann der Schutzumhang frei von einer Längsnaht ausgebildet und daher gegen aus jeder Richtung einwirkende Störungen gleichmäßig guten Schutz bieten.

Die Anpassung des Schutzumhangs an die Faltenbalgform ist besonders gut, wenn der Schutzumhang in sich elastisch ist und über seinen Verlauf Bereiche unterschiedlicher Durchmesser ermöglicht.

Besonders günstig steht der Schutzumhang im montierten Zustand in Kontakt mit der Außenfläche der Dichtungsmanschette, wodurch sich eine gleichmäßige Reibung zwischen diesen Teilen ergibt, ohne punktuelle Spitzen, etwa an den nach außen vorragenden Ringbereichen des Balgs aufzuweisen.

Hierfür kann der Schutzumhang vorteilhaft dem Faltenwurf einer balgartig ausgebildeten Dichtungsmanschette folgend angelegt und in radial einwärts weisenden Faltungen des Balgs über äußere Federringe, zum Beispiel elastische Gummiringe, gesichert sein.

Der Schutzumhang ist besonders stabil und verschleißarm aus metallischem Werkstoff, insbesondere Edelstahl, oder einem Kohlefasergeflecht gebildet. Für seine gute Formanpassbarkeit kann er ein Stahlringgeflecht umfassen, wie es etwa auch als Stichschutz bei Benutzung von Fleischereiwerkzeugen bekannt ist. Ein derartiges Material kann weich fließend auch an enge Hinterschneidungen angepaßt werden.

Die einzelnen Ringe dieses Geflechts können typisch einen Ringdurchmesser von drei bis vier Millimetern pro Ring aufweisen und der Schutzumhang insgesamt eine Dicke von einem bis drei Millimetern haben, um damit eine stabile Stichschutzeinrichtung zu bilden.

Alternativ kann der Schutzumhang auch ein Stahl- oder Kohlefasergewebe mit sich kreuzenden Fäden nach Art eines Gewebes umfassen.

Die hohe Elastizität des Schutzumhangs erlaubt es, dass dieser an beiden axialen Enden der Dichtungsmanschette über ringförmige Halterungselemente festgelegt sein kann, ohne die Gelenkbewegung einzuschränken.

Dadurch, dass vorzugsweise der Schutzumhang auf der Dichtungsmanschette nicht fest verbunden aufliegt, ist eine nachträgliche Umrüstung von bestehenden Abdichtsystemen mit dem Schutzumhang einfach möglich.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische Übersichtszeichnung einer erfindungsgemäßen Gelenk- und/oder Lageranordnung mit einem außen über die Dichtungsmanschette gelegten und über äußere Spannringe festgelegten Schutzumhang aus einer Vielzahl von ineinander greifenden Metallringen,
- Fig. 2: eine in ihrer rechten Hälfte aufgeschnittene Seitenansicht der Gelenk- und/oder Lageranordnung nach Fig. 1,
- Fig. 3: eine ähnliche Ansicht wie Fig. 1 einer alternativen Ausbildung mit einem inneren Ring, der über ausgreifende Haltenasen in die Metallringe zur Halterung des Schutzumhangs eingreift,
- Fig. 4: eine ähnliche Ansicht wie Fig. 2 der alternativen Ausbildung nach Fig. 3,
- Fig. 5: eine ähnliche Ansicht wie Fig. 1 einer alternativen Ausbildung mit einem sog. Stahlflexgewebe zur Bildung des Schutzumhangs,
- Fig. 6: eine ähnliche Ansicht wie Fig. 2 der alternativen Ausbildung nach Fig. 5,
- Fig. 7: die Gelenk- und/oder Lageranordnung nach Fig. 3 in Einbaulage als Traggelenk eines Rades innerhalb eines Fahrwerks in ausgelenkter Stellung des Zapfens gegenüber einem tragenden Lenker.

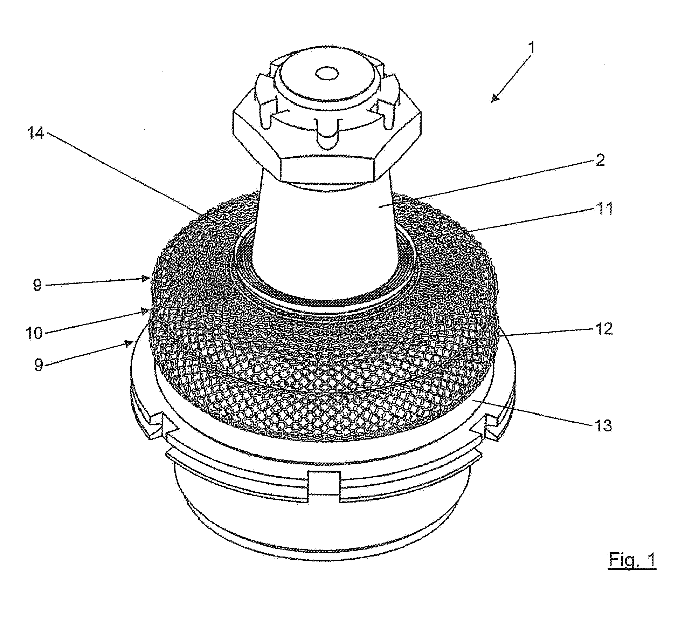

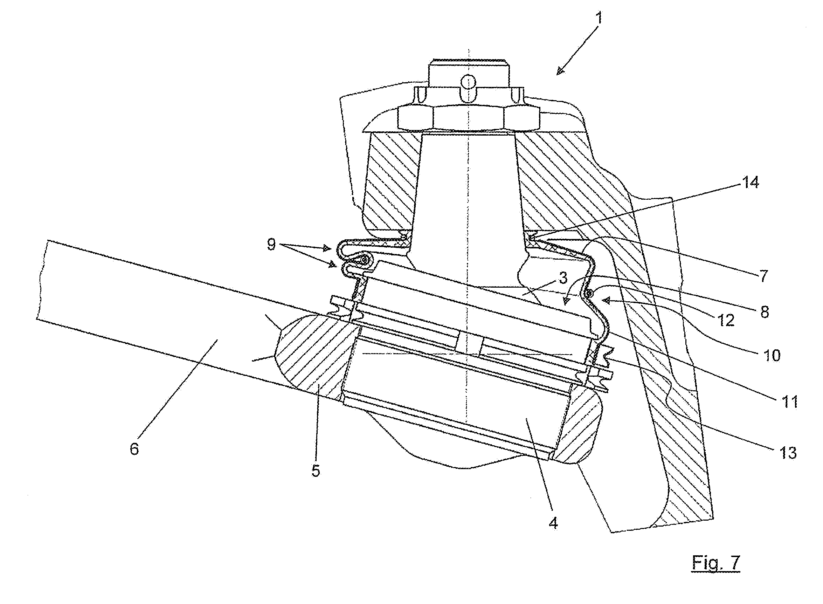

Die Gelenkanordnung 1 nach Figur 1 umfaßt einen axial erstreckten Gelenkzapfen 2 mit einem erweiterten und beispielsweise durch eine im wesentlichen kugelförmige Ausformung gebildeten Kopfbereich 3. Dieser kann in und gegenüber einer in der Regel dauergeschmierten Gelenkschale innerhalb eines Aufnahmegehäuses (Gelenkschale) 4, die den Kopfbereich aufnimmt, lenk- und/oder kippbeweglich gehalten sein. Die Gelenkschale 4 kann außerhalb des Zapfendurchtritts im wesentlichen geschlossen oder eher ringförmig ausgebildet sein. Eine solche Kippbewegung des Zapfens 2 gegenüber der Gelenkschale 4 ist in Fig. 7 dargestellt.

Weiterhin ist die Gelenkschale 4 ihrerseits zumindest radial außen teilweise von einem als Gehäuse 5 wirkenden Aufnahmeraum umgeben. Gelenkschale 4 und Aufnahmeraum 5 bilden insgesamt eine Lagerungseinheit. Das Gehäuse 5 muss keine gesonderte Baueinheit ausbilden, sondern kann auch integraler Bestandteil eines beispielsweise die Gelenkanordnung 1 im montierten Zustand umgreifenden Lenkers 6 sein, wie in Fig. 7 dargestellt ist. Ein solcher Lenker 6 kann beispielsweise durch Umspritzen oder -gießen mit flüssigem, heißem Material hergestellt werden, zum Beispiel durch Zinkdruckguß, wobei der Lenker 6 nach anschließendem Erkalten in einer Form starr und formstabil ist und ohne weitere Nachbearbeitung ein integrales Gehäuse 5 bilden kann.

Die Gelenk- und/oder Lageranordnung 1 umfaßt weiter eine Dichtungsmanschette 7, die häufig als Dichtungsbalg ausgebildet ist. Sie schließt im Bereich der von dem Gehäuse 5 belassenen Durchtrittsöffnung 8 für den Zapfen 2 an die Lagerungseinheit an und umgibt hier dichtend einen dieser zugewandten Endbereiche des Zapfens 2. Um eine gute Beweglichkeit des Zapfens 2 in der Lagerungseinheit nicht zu blockieren, weist die Dichtungsmanschette 7 vorstehende Ausbauchungen 9 und engere Hinterschneidungen 10 auf. Damit sind auch größere Kippwinkel (Fig. 7) möglich.

Radial außenseitig ist die Dichtungsmanschette 7 von einem separaten und an ihren Formverlauf anpassbaren Schutzumhang 11 umgeben, der auf unterschiedliche Arten ausgebildet sein kann. Dieser bildet einen Stichschutz gegen mechanische äußere Beschädigung aus. Insbesondere kann eine derart geschützte Gelenk- und/oder Lageranordnung 1 in Fahrwerks- oder Lenkungsteilen von Kraftfahrzeugen vorgesehen sein, vor allem auch in von außen offen zugänglichen Bereichen. So können auch Gelenke eines land- oder forstwirtschaftlichen Schleppers, eines Unimogs oder dergleichen gegen eine Beschädigung von außen durch Steine, Äste oder ähnliche scharfkantige Hindernisse erfindungsgemäß ausgebildet sein. Dies gilt insbesondere auch für frei stehende Traggelenke im Fahrwerk.

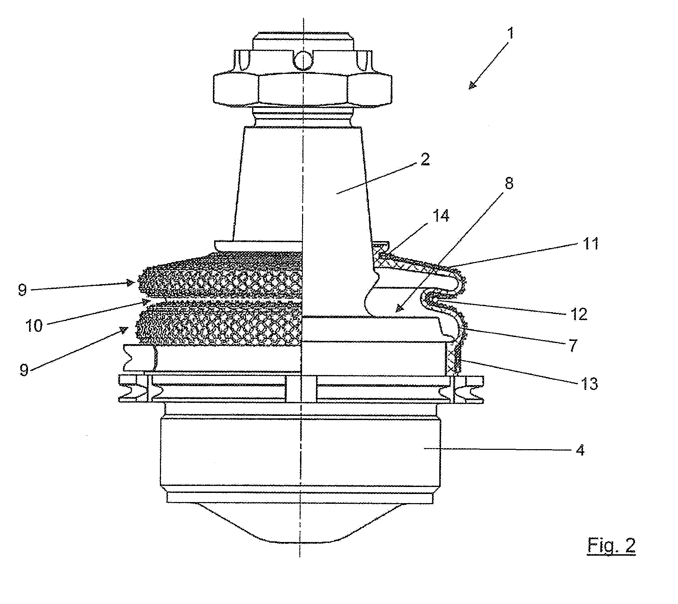

Der Schutzumhang 11 umgibt gemäß dem ersten Ausführungsbeispiel nach den Figuren 1 und 2 nach Art einer Schlauchumhüllung die Dichtungsmanschette 7 über ihren gesamten Umfang und kann sich hierfür sowohl an die Ausbauchungen 9 als auch an die Hinterschneidungen 10 anlegen und dennoch gegenüber dieser beweglich sein.

Hierfür ist der Schutzumhang 11 in sich elastisch ist und ermöglicht über seinen Verlauf Bereiche unterschiedlicher Durchmesser.

An seinen radial äußeren Enden ist der Schutzumhang 11 gemäß dem ersten Ausführungsbeispiel zum Beispiel über von außen aufsetzbare breite Spannringe 13, 14 halterbar, deren Spannung jeweils über einen Schraubverschluß geregelt werden kann. In der Hinterschneidung 10 kann ein zusätzlicher Gummiring oder sonstiger Federring 12 oder ähnliches für einen Kontakt des Schutzumhangs 11 mit der Außenfläche der Dichtungsmanschette 7 sorgen.

Somit kann der Schutzumhang im montierten Zustand über seinen ganzen Verlauf nahezu vollflächig in Kontakt mit der Außenfläche der Dichtungsmanschette 7 stehen und darüber eine punktuelle Reibung, etwa an Ausbauchungen 9, vermeiden. Um diese Anpassbarkeit zu ermöglichen, ist der Schutzumhang 11 im ersten Ausführungsbeispiel nach den Figuren 1 und 2 aus einer Vielzahl von ineinander greifenden Metallringen aufgebaut, die zum Beispiel jeder einen Durchmesser von zwei bis fünf Millimetern, insbesondere von drei bis vier Millimetern, und eine Dicke von zum Beispiel einem bis drei Millimetern haben. Auch der schlauchartige Umhang 11 kann in verschiedenen Durchmessern zur Verfügung stehen, um somit über verschiedengroße Dichtungsmanschetten 7 gezogen werden zu können.

Die Ringe haben durch ihr Ineinandergreifen Bewegungsraum in alle Richtungen. Der Schutzumhang 11 kann dadurch dem Faltenwurf der balgartig ausgebildeten Dichtungsmanschette 7 folgend eng and diesen werden, wobei ggf. die erwähnten äußeren Federringe auch für ein Anliegen in den radial einwärts weisenden Faltungen 10 des Balgs 7 sorgen. Andererseits sind die Ringe hinreichend klein, um einen guten Stichschutz auszubilden.

Ein solches Ringgeflecht besteht vorteilhaft aus metallischem Werkstoff, insbesondere einem Cr-Ni-Edelstahl, und ist - anders als eine umgebende Glocke - auch für ein Abspritzen mit einem Schlauch zu Reinigungszwecken gut geeignet. Die Ringdurchmesser sind dabei hinreichend groß, um ein Ausspülen von Schmutz zu ermöglichen, so dass dieser sich nicht zwischen dem Umhang 11 und der Dichtungsmanschette 7 sammelt.

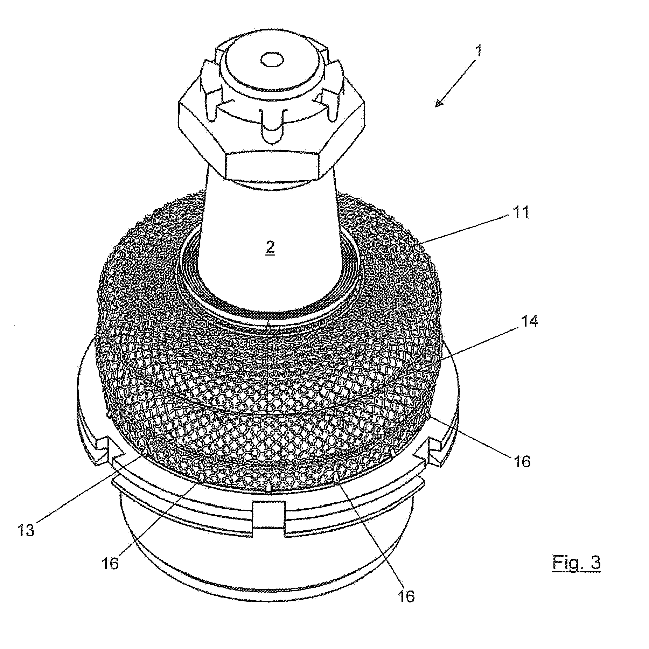

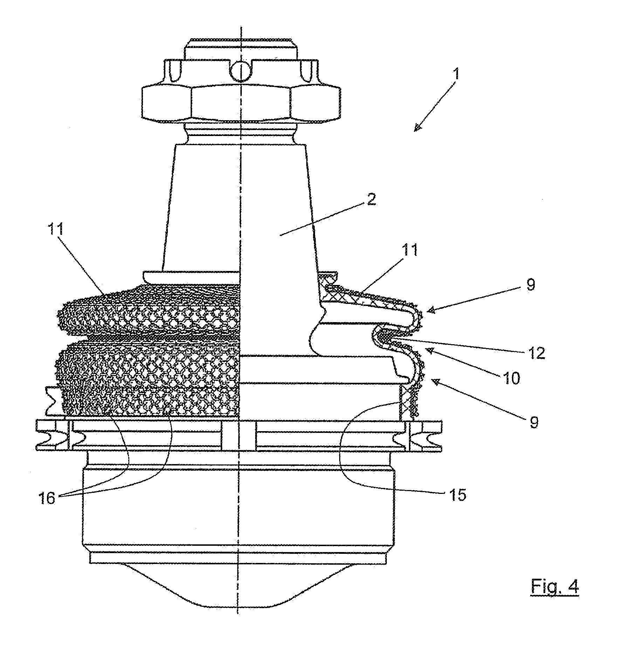

Wie in Fig. 3 und 4 sichtbar ist, kann zur Halterung des Umhangs 11 alternativ zu den äußeren Spannringen 13, 14 auch vorgesehen sein, Halteringe 15 direkt auf axiale Enden der Dichtungsmanschetten 7 zu legen und diesen Ring 15 mit auswärts greifenden und mit einer Komponente entgegen der Zugrichtung weisenden Haltezungen 16 in das Ringgeflecht 11 eingreifen zu lassen.

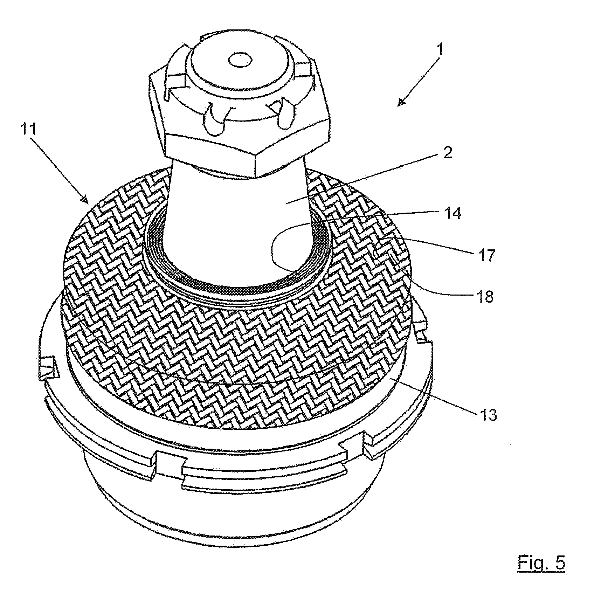

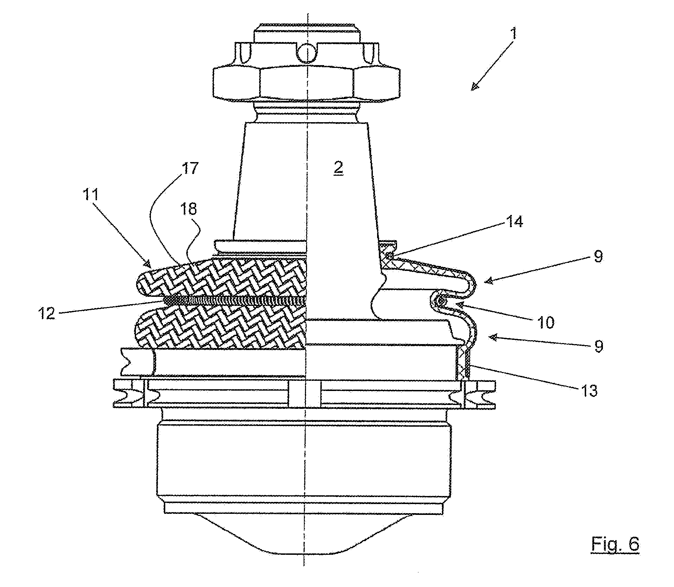

Im weiteren Ausführungsbeispiel nach den Figuren 5 und 6 ist anstelle des Ringgeflechts eine Umhangausbildung durch ein Gewebe mit sich kreuzenden Fäden 17, 18 vorgesehen. Auch dieses Gewebe kann aus Stahl, insbesondere Edelstahl, gebildet sein und im montierten Zustand vollflächig in Kontakt mit der Dichtungsmanschette 7 stehen. Ebenso sind hier Spannringe 13, 14 oder auch Federringe 12 zur Anpassung in der Hinterschneidung 10 möglich.

Die Verbindung des Schutzumhanges mit der Dichtungsmanschette mittels geeignetem Fügeverfahren, wie z.B. Kleben und Vulkanisieren, ist ebenfalls möglich.

### Bezugszeichenliste

- 1: Gelenk- oder Lageranordnung,
- 2: Zapfen,
- 3: Kopfbereich,
- 4: Gelenkschale,
- 5: Gehäuse,
- 6: Lenker,
- 7: Dichtungsmanschette,
- 8: Durchtrittsöffnung,
- 9: Ausbauchung,
- 10: Hinterschneidungen,
- 11: Schutzumhang,
- 12: Federring,
- 13: Spannring,
- 14: Spannring,
- 15: Haltering,
- 16: Haltezunge,
- 17, 18: sich kreuzende Fäden eines Geflechts

## Patentansprüche

1. Gelenk- und/oder Lageranordnung (1) mit einem Gelenkzapfen (2), insbesondere einem Gelenkzapfen (2), dessen Kopfbereich (3) gegenüber einer aufnehmenden Lagerungseinheit beweglich ist, wobei der Gelenkzapfen (2) zumindest bereichsweise von einer umlaufenden Dichtungsmanschette (7) umgeben ist,
**dadurch gekennzeichnet, dass** der Dichtungsmanschette (7) außenseitig ein von dieser separater und an ihren Formverlauf anpassbarer Schutzumhang (11) übergelegt ist.

2. Gelenk- und/oder Lageranordnung (1) nach Anspruch 1,
**dadurch gekennzeichnet, dass** der Schutzumhang (11) einen Stichschutz ausbildet.

3. Gelenk- und/oder Lageranordnung (1) nach einem der Ansprüche 1 oder 2,
**dadurch gekennzeichnet, dass** der Schutzumhang (11) nach Art einer Schlauchumhüllung die Dichtungsmanschette (7) über ihren gesamten Umfang umläuft.

4. Gelenk- und/oder Lageranordnung (1) nach einem der Ansprüche 1 bis 3,
**dadurch gekennzeichnet, dass** der Schutzumhang (11) in sich elastisch ist und über seinen Verlauf Bereiche unterschiedlicher Durchmesser ermöglicht.

5. Gelenk- und/oder Lageranordnung (1) nach einem der Ansprüche 1 bis 4,
**dadurch gekennzeichnet, dass** der Schutzumhang (11) im montierten Zustand in Kontakt mit der Außenfläche der Dichtungsmanschette (7) angeordnet ist.

6. Gelenk- und/oder Lageranordnung (1) nach einem der Ansprüche 1 bis 5,
**dadurch gekennzeichnet, dass** der Schutzumhang (11) dem Faltenwurf einer balgartig ausgebildeten Dichtungsmanschette (7) folgend angelegt und in radial einwärts weisenden Faltungen (10) des Balgs (7) über äußere Federringe (12) gesichert ist.

7. Gelenk- und/oder Lageranordnung (1) nach Anspruch 6,
**dadurch gekennzeichnet, dass** der Schutzumhang (11) aus metallischem Werkstoff, insbesondere nicht rostendem Edelstahl, gebildet ist.

8. Gelenk- und/oder Lageranordnung (1) nach Anspruch 7,
**dadurch gekennzeichnet, dass** der Schutzumhang (11) ein Stahlringgeflecht umfaßt.

9. Gelenk- und/oder Lageranordnung (1) nach Anspruch 8,
**dadurch gekennzeichnet, dass** der Schutzumhang (11) eine Dicke von einem bis drei Millimetern und einen Ringdurchmesser von drei bis vier Millimetern pro Ring aufweist.

10. Gelenk- und/oder Lageranordnung (1) nach Anspruch 7,
**dadurch gekennzeichnet, dass** der Schutzumhang (11) ein Stahl- oder Kohlefasergewebe mit sich kreuzenden Fäden (17;18) umfaßt.

11. Gelenk- und/oder Lageranordnung (1) nach einem der Ansprüche 1 bis 10,
**dadurch gekennzeichnet, dass** der Schutzumhang (11) an beiden axialen Enden der Dichtungsmanschette (7) über ringförmige Halterungselemente (13;14;15) festgelegt ist.

12. Gelenk- und/oder Lageranordnung (1) nach einem der Ansprüche 1 bis 11,
**dadurch gekennzeichnet, dass** der Schutzumhang (11) an bestehende Gelenk-und/oder Lageranordnungen (1) nachrüstbar ist.

13. Kraftfahrzeug mit zumindest einer Gelenk- und/oder Lageranordnung (1) nach einem der Ansprüche 1 bis 12, insbesondere innerhalb von Fahrwerks- und/oder Lenkungsteilen.

14. Kraftfahrzeug nach Anspruch 13,
**dadurch gekennzeichnet, dass** die Gelenk- und/oder Lageranordnung (1) ein Traglager für ein frei stehendes Rad eines land- und/oder forstwirtschaftlich sowie militärisch nutzbaren Fahrzeugs ausbildet.
